# EUROPEAN PATENT SPECIFICATION

(11) **EP 2 583 254 B1**
(45) Date of publication and mention of the grant of the patent: **12.02.2020**
(21) Application number: 11727622.0
(22) Date of filing: 17.06.2011
(51) Int. Cl.: G06T 19/00

(54) **MOBILE DEVICE BASED CONTENT MAPPING FOR AUGMENTED REALITY ENVIRONMENT**
AUF MOBILGERÄTEN BASIERENDES CONTENT-MAPPING FÜR UMGEBUNGEN MIT ERWEITERTER REALITÄT
MAPPAGE DE CONTENU À BASE DE DISPOSITIF MOBILE POUR ENVIRONNEMENT DE RÉALITÉ AUGMENTÉE

(30) Priority: 17.06.2010 US 818014
(43) Date of publication of application: 24.04.2013
(73) Proprietor: Qualcomm Incorporated, San Diego, CA 92121-1714 (US)
(72) Inventor: KONERTZ, Anne Katrin, San Diego, CA 92121-1714 (US); KEATING, Virginia Walker, San Diego, CA 92121-1714 (US)
(74) Representative: Loveless, Ian Mark
(86) International application number: PCT/US2011/040969
(87) International publication number: WO 2011/160076

(56) References cited:
- EP-A1- 1 732 042
- US-B1- 6 898 307
- STEPHAN GAMMETER ET AL: "Server-side object recognition and client-side object tracking for mobile augmented reality", COMPUTER VISION AND PATTERN RECOGNITION WORKSHOPS (CVPRW), 2010 IEEE COMPUTER SOCIETY CONFERENCE ON, IEEE, PISCATAWAY, NJ, USA, 13 June 2010 (2010-06-13), pages 1-8, XP031728435, ISBN: 978-1-4244-7029-7
- Matthew Beckler And Andrew Frenz: "Computer Vision for Augmenting Reality", Computer Vision Coursework, 8 May 2008 (2008-05-08), XP055054912, Retrieved from the Internet: URL:http://www.mbeckler.org/coursework/200 7-2008/vision_augmenting_reality.pdf [retrieved on 2013-02-28]
- KANBARA M ET AL: "Registration for stereo vision-based augmented reality based on extendible tracking of markers and natural features", PATTERN RECOGNITION, 2002. PROCEEDINGS. 16TH INTERNATIONAL CONFERENCE ON QUEBEC CITY, QUE., CANADA 11-15 AUG. 2002, LOS ALAMITOS, CA, USA,IEEE COMPUT. SOC, US, vol. 2, 11 August 2002 (2002-08-11), pages 1045-1048, XP010614059, DOI: 10.1109/ICPR.2002.1048484 ISBN: 978-0-7695-1695-0
- STEPHAN GAMMETER ET AL: "I know what you did last summer: object-level auto-annotation of holiday snaps", COMPUTER VISION, 2009 IEEE 12TH INTERNATIONAL CONFERENCE ON, IEEE, PISCATAWAY, NJ, USA, 29 September 2009 (2009-09-29), pages 614-621, XP031672531, ISBN: 978-1-4244-4420-5
- YOUNGMIN PARK ET AL: "Multiple 3D Object tracking for augmented reality", MIXED AND AUGMENTED REALITY, 2008. ISMAR 2008. 7TH IEEE/ACM INTERNATIONAL SYMPOSIUM ON, IEEE, PISCATAWAY, NJ, USA, 15 September 2008 (2008-09-15), pages 117-120, XP031343985, ISBN: 978-1-4244-2840-3
- ZAUNER JÜRGEN ET AL: "Authoring of Mixed Reality Applications including Multi-Marker Calibration for Mobile Devices", VIRTUAL ENVIRONMENTS. PROCEEDINGS OF THE EUROGRAPHICS WORKSHOP.EUROGRAPHICS, PROCEEDINGS OF EGVE, XX, XX, 9 June 2004 (2004-06-09), pages 1-9, XP002430450,

## Description

### BACKGROUND

### 1. Field

The subject matter disclosed herein relates to electronic devices, and more particularly to methods, apparatuses, and systems for use in and/or with augmented reality environments for mobile electronic devices.

### 2. Information

Mobile computing devices (mobile devices) provide users with access to a variety of information via wireless communication systems. As one example, positioning systems such as satellite and/or terrestrial based positioning systems including, for example, the global positioning system (GPS) or other like Global Navigation Satellite System (GNSS), wireless cellular networks, and/or wireless local area networks such as Wi-Fi or WiMAX may be used by mobile devices to obtain geographic positioning information. As another example, mobile devices enabled for use with wireless cellular networks and/or wireless local area networks such as Wi-Fi or WiMAX provide users with access to vast information resources of the Internet. Mobile devices may also enable users to explore augmented reality environments which provide a real-time view of a physical real-world environment that is merged with or augmented by computer generated graphical content. For example, a camera residing on-board a mobile device may be used in conjunction with a graphical display to present a user with supplemental information relating to points of interest that are captured in a camera view of the mobile device. Such supplemental information may form an information layer that overlays real-world objects that are captured in a camera view of the mobile device.

### SUMMARY

Implementations relating to the deployment of media content within an augmented reality environment are disclosed in a mobile computing context. In at least one implementation, a method is provided that includes extracting a three-dimensional feature of a real-world object captured in a camera view of a mobile device, and attaching a presentation region for a media content item to at least a portion of the three-dimensional feature responsive to a user input received at the mobile device.

### BRIEF DESCRIPTION OF DRAWINGS

Non-limiting and non-exhaustive aspects are described with reference to the following figures, wherein like reference numerals refer to like parts throughout the various figures unless otherwise specified.
FIG. 1 is a schematic block diagram of an example network environment according to one implementation.
FIG. 2 is a schematic block diagram of an example mobile device according to one implementation.
FIG. 3 is a flow diagram illustrating an example process for defining an augmented reality environment and deploying media content within that augmented reality environment according to one implementation.
FIGS. 4 - 9 show graphical user interfaces of an example augmented reality environment according to various implementations.

### DETAILED DESCRIPTION

Implementations relating to augmented reality environments are disclosed in a mobile computing context. Augmented reality authoring tools that are accessible via a mobile device enable mobile devices users to define an augmented reality environment and deploy media content such as images including photos or other graphical elements, videos, animations, text, and audio within that augmented reality environment. Media content that is deployed by a particular mobile device user may be accessed by other mobile device users that explore the augmented reality environment via their respective mobile devices.

Three-dimensional features of real-world objects such as building structures or other suitable objects of interest that are captured in a camera view of a mobile device may be extracted, for example, by application of object recognition techniques to obtain electronic representations of the three-dimensional features. Such electronic representations may comprise multiple (key) points with their associated descriptors obtained from the camera view of the three-dimensional features. Furthermore, electronic representations may also be obtained, for example, from a pre-existing feature library containing computer aided design (CAD) models and/or optical scans of such real-world objects. Information layers supporting augmented reality environments may be defined by a mobile device user through application of one or more presentation regions and/or activation regions that may be attached to such electronic representations of extracted three-dimensional features.

A presentation region for a media content item may be deployed to an augmented reality environment by a user for the purpose of defining a location (e.g., a position and/or orientation) where the media content item is presented within that augmented reality environment. An activation region for a media content item may be deployed within an augmented reality environment by a user for the purpose of defining conditions for how and/or when the presentation of the media content item at an associated presentation region may be enabled and/or initiated responsive to user input and/or estimated mobile device position and/or orientation. These and other aspects will be described in greater detail with reference to the following written description and associated figures.

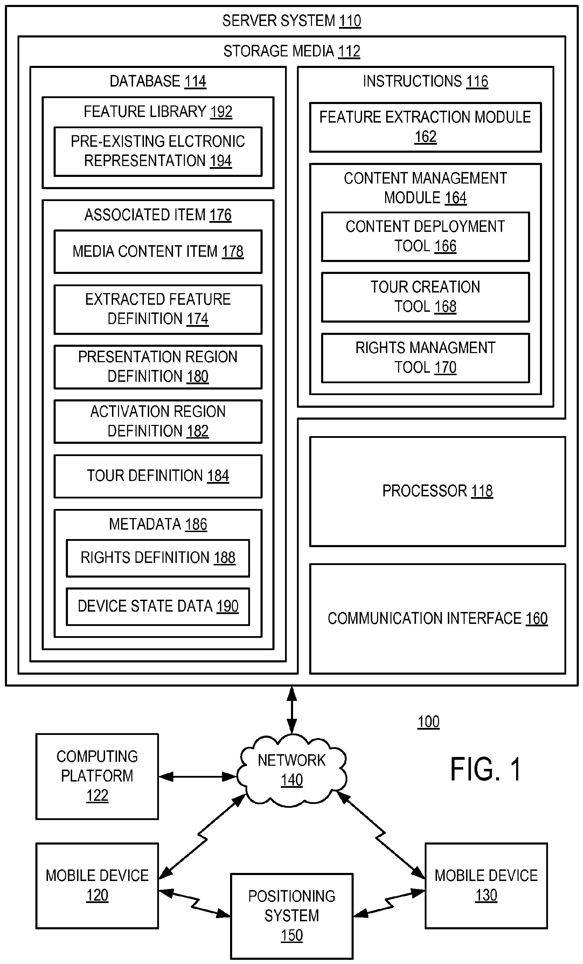

FIG. 1 is a schematic block diagram of an example network environment 100 according to one implementation. Network environment 100 may include any number of mobile devices such as, for example, mobile devices 120 and 130. Mobile devices 120 and 130 may communicate wirelessly with a server system 110 via network 140. Mobile devices 120 and 130 may comprise any suitable mobile computing platform, including a cellular phone, a smart phone, a personal digital assistant, a low duty cycle communication device, a laptop computer, a portable media player device, a personal navigation device, and a portable electronic device comprising a digital camera, to name a few examples. Furthermore, in some implementations, mobile devices 120 and 130 may comprise wearable augmented reality eyewear (e.g., glasses) that include one or more lenses for displaying graphical content such as augmented reality information layers over real-world objects that are viewable through such lenses. Network environment 100 may further include non-mobile computing platforms such as computing platform 122 that may also communicate with server system 110 via network 140. In at least some implementations, a mobile device may be adapted to communicate by docking with computing platform 122 by wired or wireless communication, for example, without utilizing network 140.

Network 140 may comprise one or more of a wide area network (e.g., the Internet), a local area network (e.g., an intranet), and/or a personal area network. For example, mobile devices 120 and 130 may communicate wirelessly with server system 110 via any suitable communication protocol, including cellular communication protocols such as CDMA, GSM, or WCDMA and/or wireless local area network (WLAN) protocols such as Wifi or WiMAX. Accordingly, network 140 may include one or more wireless transceivers in such implementations. Wireless transceivers of network 140 may also be utilized by mobile devices 120 and 130 to obtain positioning information for estimating mobile device position.

In some implementations, a trilateration based approach may be utilized by a mobile device to estimate geographic position. For example, techniques including Advanced Forward Link Trilateration (AFLT) in CDMA or Enhanced Observed Time Difference (EOTD) in GSM or Observed Time Difference of Arrival (OTDOA) in WCDMA may be used, which measures at a mobile device the relative times of arrival of wireless signals transmitted from each of several transmitter equipped base stations. As another example, a mobile device may estimate its position by obtaining a Media Access Control (MAC) address or other suitable identifier associated with a wireless transceiver and correlating the MAC address or identifier with a known geographic location of that wireless transceiver.

Mobile devices 120 and 130 may further obtain wireless positioning signals from a positioning system 150 to estimate mobile device position. For example, positioning system 150 may comprise a Satellite Positioning System (SPS) and/or a terrestrial based positioning system. Satellite positioning systems may include, for example, the Global Positioning System (GPS), Galileo, GLONASS, NAVSTAR, GNSS, a system that uses satellites from a combination of these systems, or any SPS developed in the future. As used herein, an SPS will also be understood to include pseudolite systems. It should be understood, however, that particular positioning techniques provided here are merely example positioning techniques, and that claimed subject matter is not limited in this respect.

Server system 110 may comprise one or more servers and/or other suitable computing platforms. Accordingly, server system 110 may include storage media 112 having database 114 and instructions 116 stored thereon. Server system 110 may include one or more processors such as example processor 118 for executing instructions 116 and/or for facilitating storage and retrieval of data at database 114. Server system 110 may further include a communication interface 160 for facilitating communication with clients of network 140, including mobile devices 120 and 130, and computing platform 122.

To facilitate understanding of the disclosed implementations, instructions 116 may be at times described in terms of one or more modules for performing particular operations. As one example, instructions 116 may include a feature extraction module 162 to extract features of real-world objects captured in a camera view of a mobile device. As another example, instructions 116 may include a content management module 164 to manage the deployment of media content within an augmented reality environment. Content management module 164 may include a number of tools to enable a user (e.g., a human user) to interact with the content management module, for example, via a mobile device (e.g., mobile device 120) or other suitable computing platform (e.g., computing platform 122). In at least some implementations, content management module 164 may include a content deployment tool 166 to enable a user to deploy media content within an augmented reality environment; a tour creation tool 168 to enable a user to create a tour comprising one or more media content items deployed at one or more locations within an augmented reality environment; and a rights management tool 170 to enable a user to manage access rights of other users to media content that has been deployed by that user. Such tools may be accessible to a user via input or output devices of a mobile device or other suitable computing platform. For example, a graphical user interface (GUI) presented at a graphical display of a mobile device may enable a user to define an augmented reality environment comprising one or more media content items by using one or more of tools 166, 168, and 170.

Database 114 may include a variety of data, including one or more associated items such as example associated item 176. Associated item 176 may include, for example, at least one media content item 178 and other associated data elements, including for example: a presentation region definition 180, an activation region definition 182, a tour definition 184, metadata 186, and an extracted feature definition 174. Database 114 may further include a feature library 192 having one or more pre-existing electronic representations of real-world three-dimensional features such as example pre-existing electronic representation 194. Such pre-existing electronic representations may be created, for example, by the application of optical and/or sound wave scanning techniques to real-world features, or through development of computer aided design (CAD) models of real-world features.

Presentation region definition 180 may define a location relative to an extracted feature of a real-world object (e.g., as represented by extracted feature definition 174) where media content (e.g., media content item 178) may be presented within an augmented reality environment. Presentation region definition 180 may be defined by a user via content deployment tool 166.

Activation region definition 182 may define how and/or when the presentation of media content at a presentation region (e.g., as defined by presentation region definition 180) may be enabled or initiated responsive to user input and/or estimated position and/or orientation of a mobile device. Activation region definition 182 may be defined by a user via content deployment tool 166. For example, a user may utilize content deployment tool 166 to create activation region definition 182 that defines an activation region for an associated media content item (e.g., media content item 178).

Tour definition 184 may define a guided tour within an augmented reality environment that comprises one or more associated media content items. A user may utilize tour creation tool 168 to create tour definition 184. Tour definition 184 may define a group of any suitable number of media content items that have been deployed within an augmented reality environment. Other users may access a guided tour of the associated media content items by exploring within an augmented reality environment via a camera view of a mobile device. Accordingly, it will be appreciated that database 114 may include any suitable number of associated media content items and that media content item 178 may comprise one of a plurality of media content items associated with a given tour as defined by tour definition 184.

Metadata 186 may include a rights definition 188 defining rights of users to access deployed media content items such as associated media content item 178. In some implementations, a user may use rights management tool 170 to create rights definition 188 for associated media content item 178. As a non-limiting example, a user may exclude select users from accessing a particular media content item, or a user may grant select users the right to access a particular media content item within an augmented reality environment.

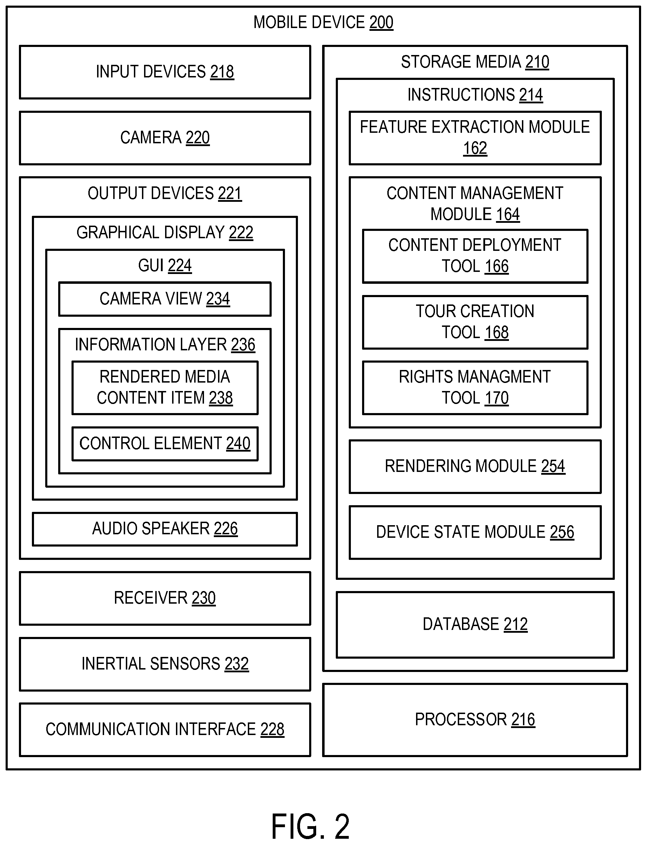

Metadata 186 may further include device state data 190 that is associated with media content item 178. Device state data 190 may indicate a position and/or orientation of a mobile device, for example, while the mobile device is capturing the associated media content item. In some implementations, a position of a mobile device may be represented as one or more latitude, longitude, and/or altitude values measured relative to a reference datum. Similarly, orientation of a mobile device may be represented by one or more roll, pitch, and/or yaw values measured relative to a reference datum. A reference datum with respect to such orientation values may be defined, for example, as an axis of a line of sight of a camera of the mobile device. Such device state data may be based upon one or more positioning signals and/or inertial sensor measurements that are obtained at the mobile device as will be described in greater detail with reference to FIG. 2.

FIG. 2 is a schematic block diagram of an example mobile device 200 according to one implementation. Mobile device 200 may serve as a non-limiting example of mobile devices 120 and 130 of FIG. 1 for at least some implementations. Accordingly, mobile device 200 may include a communication interface 228 to facilitate communication with other computing platforms, such as server system 110, mobile devices 120, 130 and/or computing platform 122 of FIG. 1, for example. Hence, communication interface 228 may enable wireless communication with communication networks including example network 140. Mobile device 200 may further include a receiver 230 to receive positioning signals from a positioning system such as example positioning system 150, for example.

Mobile device 200 may include input devices 218 to receive user inputs. Input devices 218 may include, for example, one or more physical buttons, keyboards, controllers, microphones, pointing devices, and/or touch-sensitive surfaces, for example. Mobile device 200 may include output devices 221 to present information to a user. As one example, output devices 221 may include a graphical display 222 to present a graphical user interface 224. Graphical display 222 may include any suitable display device including a liquid crystal display (LCD), cathode ray tube (CRT) display, rear projection display, etc. In at least some implementations, graphical display 222 may comprise a touch-sensitive graphical display (e.g., a touch screen) capable of receiving user input, for example, via one or more touch gestures. A touch-sensitive graphical display may utilize any suitable sensing technique for detecting user input at or near a display surface, including capacitive sensing, resistive sensing, and/or optical sensing techniques, for example. In such touch-sensitive implementations, graphical display 222 may serve as both an input device for receiving user input and an output device for presenting graphical content. Output devices 221 may further include an audio speaker 226 for presenting audio content in some implementations.

In at least some implementations, a graphical user interface (GUI) 224 may be presented at graphical display 222. GUI 224 may comprise one or more of a camera view 234 obtained via camera 220 and an information layer 236. Information layer 236 may comprise one or more rendered media content items such as rendered media content item 238 and one or more graphical control elements such as graphical control element 240. As a non-limiting example, rendered media content item 238 may correspond to a rendered state of media content item 178 such as an image, a video, an animation, among other suitable graphical content or a portion thereof. Graphical control element 240 may include one or more graphical elements for enabling a user to provide user input for controlling functionality of the mobile device.

Mobile device 200 may include one or more inertial sensors 232 to obtain inertial sensor measurements on-board the mobile device. In at least some implementations, inertial sensors 232 may comprise one or more accelerometers, gyroscopes, or other suitable devices for measuring an inertial state of a mobile device. In some implementations, an inertial state of a mobile device may be measured by inertial sensors 232 along multiple axes in cartesian and/or polar coordinate systems to provide an indication of position and/or orientation of the mobile device.

It will be appreciated that inertial sensor measurements obtained from inertial sensors 232 may be processed (e.g., integrated over time) to obtain such estimates of mobile device position and/or orientation. As previously described, a position of a mobile device may be represented as one or more latitude, longitude, and/or altitude values and an orientation of a mobile device may be represented by one or more roll, pitch, and/or yaw values measured relative to a reference datum. Mobile device 200 may include a camera 220 to obtain a camera view 234 which may be presented at graphical display 222. Camera 220 may comprise a digital camera in some implementations having a number of optical elements including one or more lenses for focusing light and/or one or more light sensing elements for converting light into digital signals representative of image and/or video data. As a non-limiting example, a light sensing element may comprise an optical pickup, charge-coupled device and/or photoelectric device for converting light into digital signals. Digital signals obtained from one or more light sensing elements of the camera may be processed and/or rendered at graphical display 222 as camera view 234. Furthermore, in some implementations, a camera view obtained via camera 220 may be stored at storage media as image and/or video content. For example, digital signals obtained from camera 220 may be encoded and stored at storage media 210 as .jpeg, .mpeg, or other suitable format. Such digital signals representative of a camera view may be transmitted to other computing platforms for storage and/or processing. For example, a camera view obtained at a mobile device may be transmitted to a server system or other suitable computing platform via a communication network or by docking with another computing platform.

Mobile device 200 may further include storage media 210 having a database 212 and instructions 214 stored thereon. Mobile device 200 may include one or more processors such as example processor 216 for executing instructions 214 and/or facilitating storage and retrieval of data at database 212. Database 212 may include a variety of data, including some or all of the data elements previously described with reference to database 114 of FIG. 1. For example, database 212 may retain locally at mobile device 200, one or more of associated content item 176 and feature library 192, among other data. It will be appreciated that such data may also be retained remotely, for example, at a server system such as server system 110 of FIG. 1 where it may be accessed by the mobile device via a wireless network.

Instructions 214 may similarly include one or more of the previously described modules and/or tools of instructions 116 of FIG. 1. For example, instructions 214 may include previously described feature extraction module 162 and content management module 164 retained locally at mobile device 200. Instructions 214 may further include rendering module 254 to facilitate rendering and/or presentation of GUI 224 at graphical display 222. Instructions may further include a device state module 256 for processing positioning signals obtained via receiver 230 and/or inertial sensor measurements obtained via inertial sensors 232. For example, device state module 256 may be adapted to estimate a position and/or orientation of mobile device 200 based, at least in part, on such positioning signals and/or inertial sensor measurements. An estimated position and/or orientation of mobile device 200 may be stored at database 212, for example, as previously described with reference to device state data 190. In at least some implementations, device state module 256 may be adapted to obtain device state data for a mobile device responsive to the capture of a media content item at the mobile device. For example, an image captured at mobile device 200 via camera 220 may cause device state module 256 to estimate a position and/or orientation of the mobile device at or near a time that the image was captured. Device state module 256 may be further adapted to associate the device state data with that media content item (e.g., as metadata), for example, at database 212 or database 114.

Furthermore, in at least some implementations, digital signals representative of a camera view obtained via camera 220 may be captured as a static image or a dynamic video. Such digital signals may be processed by feature extraction module 162 to obtain an electronic representation (e.g., a model) of real-world features captured within the camera view. Such electronic representations of real-world features may be stored at database 212 and/or database 114 as extracted feature definition 174 where it may be associated with one or more media content items such as media content item 178, for example.

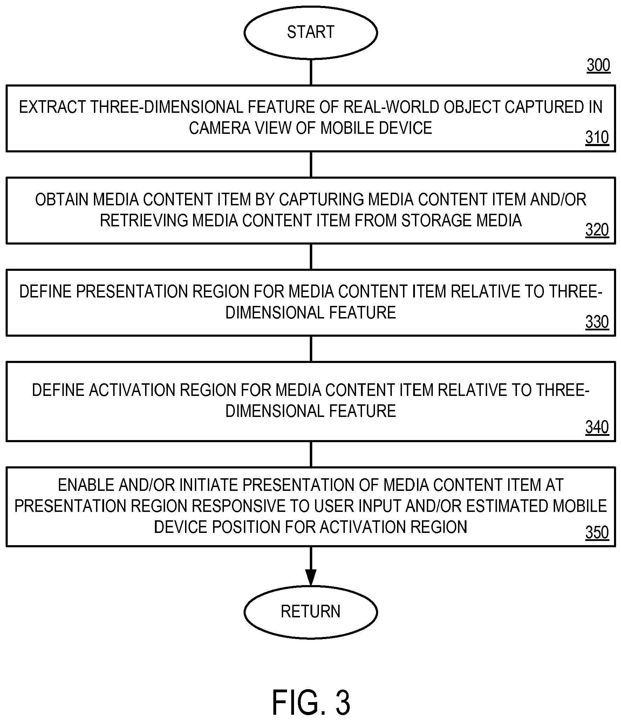

It will be appreciated that at least some elements of the example mobile device 200 of FIG. 2 may be present in other mobile or non-mobile computing platforms such as computing platform 122 of FIG. 1 to enable such computing platforms to perform one or more of the operations, processes, and methods described herein. For example, computing platform 122 of FIG. 1 may comprise storage media such as storage media 210 including instructions 214 and/or database 212, one or more processors such as processor 216, one or more input and output devices, and a communication interface such as communication interface 218. Accordingly, one or more of the operations, processes, and methods described herein, for example, with reference to FIG. 3 are not necessarily limited to mobile devices.

FIG. 3 is a flow diagram illustrating an example process 300 for defining an augmented reality environment and deploying media content within that augmented reality environment according to one implementation. As one example, process 300 may be performed by one or more processors executing instructions locally at a mobile device and/or remotely at a server system or other suitable computing platform. Accordingly, the various operations of process 300 may be represented by executable instructions held in storage media of one or more computing platforms such as storage media 112 of server system 110 and/or storage media 210 of mobile device 200, for example.

Briefly, process 300 for deploying media content within an augmented reality environment may comprise one or more of the following operations: extracting a three-dimensional feature of a real-world object captured in a camera view of a mobile device at operation 310; obtaining a media content item, for example, by capturing the media content item at the mobile device and/or by retrieving an existing media content item from a storage media at operation 320; defining a presentation region for the media content item relative to the three-dimensional feature at operation 330; defining an activation region for the media content item relative to the three-dimensional feature at operation 340; and enabling and/or initiating presentation of the media content item at the presentation region responsive to user input and/or estimated mobile device position for the activation region at operation 350.

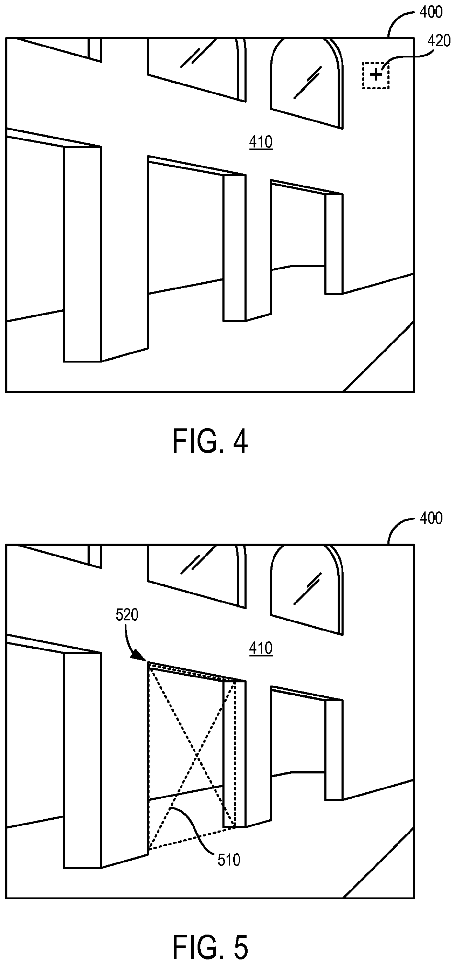

Referring to operation 310, a three-dimensional feature of a real-world object captured in a camera view of a mobile device may be extracted. Real-world objects may include any suitable object of interest including, for example, man-made objects (e.g., building structures, bridges, roads, etc.) and/or natural objects (e.g., mountains, trees, rivers, etc.). For example, referring also to FIG. 4, a GUI comprising a camera view 400 of an example augmented reality environment is shown according to one implementation. In FIG. 4, an example three-dimensional feature 410 of a real-world object (e.g., a building structure) is captured in camera view 400.

In at least some implementations, the feature extraction process performed at operation 310 may include applying object recognition techniques to a real-world three-dimensional feature captured in a camera view of a mobile device. For example, such object recognition techniques may be applied at a mobile device or remotely at a server system or other suitable computing platform by feature extraction module 162 on the sample camera view obtained at the mobile device to generate an electronic representation (e.g., keypoints and descriptors, lines, etc.) of a real-world three-dimensional feature. Such object recognition techniques may comprise standard and/or well known object recognition techniques in at least some implementations. Non-limiting examples of such object recognition techniques for generating keypoints and descriptors include scale-invariant feature transform (SIFT), ferns, and speeded up robust features (SURF), among others. It will be appreciated that the claimed subject matter is not limited to the example object recognition techniques described herein.

A reference electronic representation of a real-world three-dimensional feature to which one generated from the sample camera view is compared may include a pre-existing electronic representation (e.g., a model, keypoints and descriptors) of that three-dimensional feature or the electronic representation may be created from a camera view as an ad hoc electronic representation of that three-dimensional feature. Furthermore, real-world features may comprise two-dimensional and/or three-dimensional surfaces. As one example, a model for two-dimensional real-world features may be created, at least in part, from keypoints and detectors, lines, shapes, or other visual elements of the real-world features captured in a single camera view of a mobile device. As another example, a model for three-dimensional real-world features may be created, at least in part, from two or more camera views obtained at different positions and/or orientations relative to the real-world feature. For example, a plurality of two-dimensional images representative of multiple camera views capturing a particular feature at multiple different angles, orientations, etc. may be used to construct (e.g., through triangulation methods) a three-dimensional electronic representation of that feature. As yet another example, pre-existing three-dimensional electronic representations of real-world features may be created, for example, by the application of scanning techniques to such features. As a non-limiting example, optical (e.g., laser) or sound wave scanning techniques may be applied to real-world objects such as buildings, cities, or landscapes to create a pre-existing three-dimensional electronic representation of those real-world objects. As yet another example, pre-existing three-dimensional electronic representations of real-world objects may be generated from computer aided design (CAD) models. Pre-existing electronic representations of real-world objects may be held in a storage media at a mobile device and/or a server system (e.g., as part of feature library 192) where it may be accessed by feature extraction module 162.

As a non-limiting example, a pre-existing electronic representation (e.g., pre-existing electronic representation 194) may include a data set comprising any suitable number of data elements (e.g., spatial coordinates in two or three-dimensional space, multi-dimensional descriptor vectors) that are representative of a three-dimensional feature of a real-world object. Mobile device state information (e.g., device state data 190), as obtained from positioning signals and/or inertial sensor measurements, may also be used by the feature extraction module to locate and retrieve potentially relevant pre-existing electronic representations from the feature library, for example, based upon estimated mobile device position and/or orientation. The feature extraction module may search the domain of relevant pre-existing electronic representations to find a particular pre-existing electronic representation that matches or contains the three-dimensional feature. Accordingly, a particular pre-existing electronic representation that matches, represents, or contains a three-dimensional feature captured in a camera view of a mobile device may be identified through object recognition approaches and/or by referencing device position and/or orientation of the mobile device. A pre-existing electronic representation that is obtained from the database may be utilized as extracted feature definition 174 to be associated with media content item 178, for example.

However, in other examples where a pre-existing electronic representation of a three-dimensional feature does not yet exist or is not yet accessible by the feature extraction module, an electronic representation (e.g., an image file or video file) of one or more camera views capturing the three-dimensional feature may be utilized by the feature extraction module to create an ad hoc electronic representation of that three-dimensional feature. Again, this ad hoc electronic representation may comprise two-dimensional models or three-dimensional models of such real-world features. As one example, a two-dimensional model of real-world features may be created, at least in part, from corners, lines, shapes, or other visual elements of the real-world features captured in a camera view of the mobile device that is used to author the augmented reality environment. As another example, a three-dimensional model of real-world features may be created, at least in part, from two or more camera views obtained at different positions relative to such real-world features by the mobile device that is used to author the augmented reality environment.

Ad hoc electronic representations may be added to the feature library by the feature extraction module and may further indicate device state data (e.g., mobile device position and/or orientation) associated with the camera view from which the three-dimensional representation was captured. Under this scenario, the ad hoc electronic representation may be utilized by the feature extraction module as extracted feature definition 174 instead of or in addition to using a pre-existing electronic representation of that three-dimensional feature.

The extracted feature definition, whether obtained from a pre-existing electronic representation or an ad hoc electronic representation, may be associated with a media content item that is to be deployed within an augmented reality environment as will be described with reference to operation 320. The extracted feature definition may be later referenced by the feature extraction module while applying object recognition to other camera views (e.g., of other mobile devices) for the purpose of presenting media content items as will be described with reference to operation 350.

At 320, a media content item may be obtained by capturing the media content item at a mobile device and/or by retrieving the media content item from a storage media. In at least some implementations, operation 320 may be performed by content management module 164 responsive to user input (e.g., a user selection) received via content deployment tool 166. As previously described, a media content item may include audio content (e.g., a sound recording) and/or visual content (e.g., an image, a graphical element, a video, an animation, textual content, three-dimensional graphical content, among other graphical content etc.). As one example, image or video content may be captured via a camera (e.g., camera 220) of a mobile device. As another example, textual content may be captured via an input device of a mobile device that is suitable for capturing textual content (e.g., a keyboard). As yet another example, audio content may be captured via an input device of a mobile device that is suitable for capturing audio content (e.g., a microphone).

Alternatively or additionally, media content items may be obtained from a storage media residing on-board a mobile device (e.g., at database 212) or from a storage media residing at another computing platform such as a server system (e.g., at database 114). In at least some implementations, a GUI presented at a mobile device via a graphical display may include one or more graphical control elements for enabling a user to obtain a media content item by capturing that media content item (e.g., via a camera, microphone, or other input device) and/or by retrieving that media content item from a storage media where it is held. Referring also to FIG. 4, for example, an example GUI is depicted in which a camera view 400 may be presented via a graphical display of a mobile device in real-time as a user points a camera of the mobile device at a real-world object such as three-dimensional feature 410. However, in at least some implementations, the camera view 400 may be stored as an image or other suitable data format where it may be later referenced or retrieved by a user via another suitable computing platform. Hence, a camera view (e.g., camera view 400) previously captured at a mobile device may be later presented at a non-mobile computing platform (e.g., computing platform 122) for purposes of enabling authoring of augmented reality environments even though the camera view is not representative of a real-time view of a real-world object captured in that camera view. In at least some implementations, a graphical control element 420 (e.g., a selectable graphical button or icon) may be presented at the GUI for enabling a user to obtain a desired media content item.

At 330, a presentation region for the media content item obtained at operation 320 may be defined relative to the three-dimensional feature extracted at operation 310. A presentation region for a media content item may be deployed to an augmented reality environment by a user for the purpose of defining a location where the media content item is to be presented within that augmented reality environment. For example, referring also to FIG. 5, an example GUI is depicted in which a presentation region 510 is defined by a user relative to three-dimensional feature 410. In at least some implementations, operation 330 may be performed by content management module 164 responsive to user input (e.g., a user selection) received via content deployment tool 166. Content deployment tool 166 may be used by a mobile device user or a user of another computing platform to create a presentation region definition 180 that defines the presentation region relative to the extracted three-dimensional feature (e.g., represented electronically as extracted feature definition 174).

In at least some implementations, a presentation region for a media content item may be defined relative to a three-dimensional feature by attaching the presentation region to at least a portion of the three-dimensional feature and/or by varying a position and/or orientation of the attached presentation region relative to the three-dimensional feature. In at least some implementations, a presentation region for a media content item may be attached to at least a portion of a three-dimensional feature responsive to a user input received at a mobile device (e.g., mobile device 120) or other suitable computing platform (e.g., computing platform 122). Such a user input may be received at the mobile device via a user input device, for example, by the user pressing a physical button or by pressing a graphical button or icon presented at a touch-sensitive graphical display of the mobile device. As a non-limiting example, a user may utilize touch gestures at a GUI presented via a touch-sensitive graphical display of a mobile device to define placement of a presentation region relative to the three-dimensional feature by manipulating, moving, and/or resizing that presentation region. As another example, referring again to FIG. 5, graphical control element 420 may be selected by a user, for example, to initiate attachment of presentation region 510 to three-dimensional feature 410.

In at least some implementations, a presentation region may comprise a presentation surface upon which the media content item may be presented within an augmented reality environment. For example, presentation region 510 of FIG. 5 comprises a presentation surface that has been defined so that it substantially fills a doorway of the building structure of the three-dimensional feature. In such implementations, a presentation region may be attached to at least a portion of the three-dimensional feature by associating a presentation surface of the presentation region with at least a portion of an electronic representation of the three-dimensional feature that was obtained, for example, at operation 310.

For example, a user may associate a point or an edge of a presentation region with a point or an edge of a three-dimensional feature as indicated, for example, at 520 by manipulating the presentation region relative to the three-dimensional feature through one or more user inputs received at a touch-screen interface or other suitable input device. Here, in particular implementations discussed above, such a three-dimensional feature may be descriptive of a real-world object shown in a camera view presented via such a touch-screen interface. As a non-limiting example, a user may select a point (e.g., a corner, a center point, etc.) or an edge of a presentation region and select a point or an edge of a three-dimensional feature (e.g., as recognized through the application of object recognition techniques) to associate the point or edge of the presentation region with the point or an edge of the three-dimensional feature. As another example, a user may select a point or an edge of a presentation region and drag the selected point or edge of the presentation region to a point or an edge of a three-dimensional feature to associate the selected point or edge of the presentation region with the point or edge of the three-dimensional feature.

In some implementations, a user may select (e.g., press on a touch-screen interface) and hold on a presentation region for a threshold period of time to summon one or more icons that indicate or highlight points, edges, or other prominent features of a presentation region that may be associated with a three-dimensional feature. Similarly, in some implementations, a user may press and hold on a three-dimensional feature for a threshold period of time to summon one or more icons that indicate or highlight points, edges, or other prominent features of a three-dimensional feature that may be associated with a presentation region. For example, a content management module may be adapted to highlight such points, edges, or other prominent features of a presentation region and/or a three-dimensional feature for the benefit of a user to enable the user to select from such highlighted features. In response to a user attaching a presentation region to a three-dimensional feature, a content management module may be adapted to update a presentation region definition for that presentation region to reflect how the presentation region is defined relative to an electronic representation of the three-dimensional feature. It will be appreciated that such examples are non-limiting, and that other suitable approaches may be utilized to attach a presentation region to three-dimensional features extracted from a camera view.

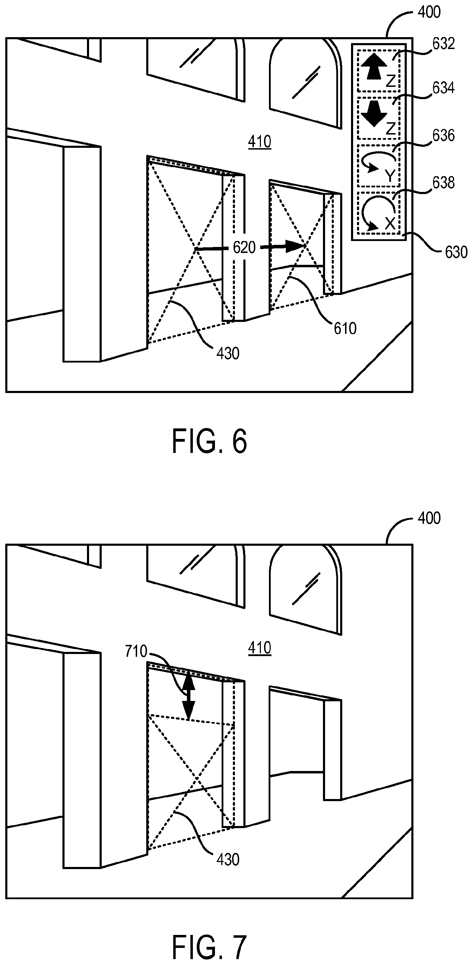

In some implementations, the attached presentation region may be edited by a user through translation, reorientation, or resizing the presentation region relative to the three-dimensional feature responsive to one or more additional user inputs. Such additional user inputs may include, for example, one or more touch gestures received via a touch-sensitive graphical display of a mobile device. For example, referring also to FIG. 6, an example GUI is depicted in which a presentation region 430 may be translated relative to three-dimensional feature 410 to a different position 610 responsive to a touch gesture indicated by vector 620. Such touch gestures may be received at the presentation region as a drag and drop operation, for example. In other examples, a presentation region may be rotated relative to a three-dimensional feature responsive to additional user inputs indicative of a rotation of the presentation region.

In at least some implementations, touch gestures or other suitable user inputs may be received at an information layer 630 that enables a user to edit a presentation region by translation, rotation, and/or resizing of a presentation region relative to a three-dimensional feature. Information layer 630 may comprise a menu that includes any suitable number of graphical control elements. As one example, graphical control elements 632 and 634 may be selected by a user to translate the presentation region toward or away from its present position. As another example, graphical control element 636 may be selected to rotate the presentation region about a first axis of rotation and/or graphical control element 638 may be selected to rotate the presentation region about a second axis of rotation different than the first axis. In this way, a user may vary the position and/or orientation of the presentation region in three-dimensional space.

In at least some implementations, an information layer such as information layer 630 may be displayed to a user responsive to the user selecting or pressing on the presentation region via a touch-gesture or other suitable user input. As one example, a user may enter an edit mode for the presentation region whereby an information layer such as information layer 630 may be displayed responsive to the user pressing and holding a touch input at the presentation region for a threshold period of time (e.g., 1.0 seconds or other suitable period of time).

Referring also to FIG. 7, an example GUI is depicted in which a presentation region 430 may be re-sized relative to three-dimensional feature 410 responsive to additional user inputs as indicated by vector 710. Such additional user inputs for editing an attached presentation surface may be received via a user input device of a mobile device, such as via a touch-sensitive graphical display or other suitable user input device. For example, a user may edit the presentation region by touching the presentation region at a location where it is rendered on a touch-sensitive graphical display of the mobile device and dragging at least a portion of the presentation region to a different position to vary its position and/or orientation.

In response to a user editing a presentation region either by translating, rotating, or resizing the presentation region, a content management module may be adapted to update a presentation region definition for that presentation region to reflect changes in how the presentation region is defined relative to an electronic representation of the three-dimensional feature. As a non-limiting example, where the presentation region is defined by one or more points measured relative to coordinate system of a three-dimensional feature, such editing by a user may cause the one or more points to be offset relative to the coordinate system of the three-dimensional feature by an amount indicated by one or more user inputs. Updating of the presentation region definition may be performed by content management module 164 responsive to such editing so that the presentation region may be rendered at a position and/or orientation desired by the user.

In some implementations, content deployment tool 166 may employ a partially automated process for attaching presentation regions to three-dimensional features. For example, the content deployment tool may recognize certain features such as horizontal and vertical features, edges, corners, etc. in real-world objects and suggest how to place a presentation surface in relation to such real-world objects. A user may then adjust the initial placement of the presentation surface by editing the position and/or orientation of the presentation surface relative to the three-dimensional feature (e.g., to add spatial perspective). A user may then lock a presentation surface in place relative to a three-dimensional feature responsive to additional user input, for example, by selecting a graphical control element of the GUI, by utilizing a particular touch gesture at a touch-sensitive graphical display (e.g., a double tap), or by submitting additional input via a user input device. In this way, media content deployed within an augmented reality environment may be tailored to fit particular three-dimensional features of real-world objects that are present in that augmented reality environment.

In some implementations, a presentation region may comprise a three-dimensional volume defining a plurality of presentation surfaces. Such three-dimensional volumes may be utilized, for example, to present graphical elements, animations, etc. as a three-dimensional representation of such elements or animations in an augmented reality environment. For example, a presentation region may comprise regular three-dimensional shapes (e.g., spheres, cubes, etc.) or irregular three-dimensional shapes (e.g., humanoid or animal characters, furniture, vehicles, etc.) upon which media content may be presented. It will be appreciated that a position and an orientation of presentation regions that comprise a three-dimensional volume may be varied in a similar manner as previously described with reference to presentation surfaces.

At 340, an activation region for the media content item obtained at operation 320 may be defined relative to the three-dimensional feature extracted at operation 310. An activation region for a media content item may be deployed within an augmented reality environment by a user for the purpose of defining how the presentation of the media content item at a presentation region may be enabled and/or initiated responsive to user input and/or estimated mobile device position.

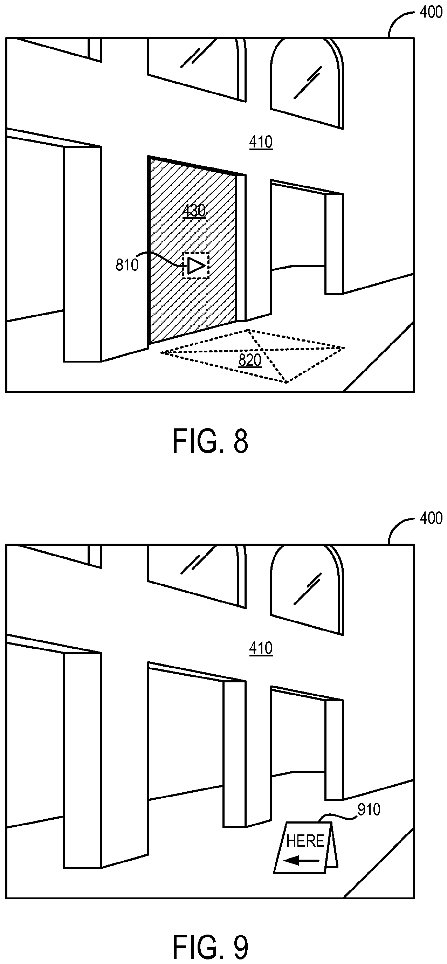

For example, referring also to FIG. 8, an example GUI is depicted in which an activation region 810 may be defined relative to three-dimensional feature 410 so that the activation region at least partially overlaps presentation region 430. Activation region 810 is depicted as a selectable graphical button or icon in this particular example. A mobile device user may utilize one or more user inputs to initiate presentation of a media content item at presentation region 430, for example, by selecting activation region 810. In this particular example, activation region 810 comprises an activation surface that may be associated with an electronic representation of the three-dimensional feature 410 as previously described with reference to presentation surfaces.

As another example, an activation region 820 is defined relative to three-dimensional feature 410 so that a mobile device user may enable and/or initiate presentation of a media content item at presentation surface by physically moving the mobile device within activation region 820. For example, activation region 820 may be defined to initiate presentation of a media content item at presentation region 430 upon a mobile device entering within activation region 820 without requiring additional user input. In other examples, activation region 820 may be defined to enable presentation of a media content item at presentation region 430 upon a mobile device entering within activation region 820. Once presentation of the media content has been enabled, a user may be prompted to initiate presentation of the media content item by providing a user input, for example, at another activation region such as activation region 810 or any suitable input device of the mobile device.

In at least some implementations, an activation region may be defined using a similar process as the process described above at operation 330 for defining a presentation region. For example, an activation region for a media content item may be defined relative to a three-dimensional feature by attaching the activation region to at least a portion of the three-dimensional feature and/or by editing a position and/or orientation of the attached activation region relative to the three-dimensional feature. In response to attachment and/or editing of an activation region by a user, a content management module may be adapted to update an activation region definition for that activation region to reflect how the activation region is defined relative to an electronic representation of the three-dimensional feature.

In at least some implementations, an activation region may comprise an activation surface that may be presented within an augmented reality environment. In such implementations, the activation region may be attached to at least a portion of the three-dimensional feature by associating an activation surface of the activation region with at least a portion of an electronic representation of the three-dimensional feature that was obtained, for example, at operation 310. A user may also vary a position and/or orientation of an attached activation region as previously described with reference to the editing of presentation surfaces at operation 330.

While operations 310, 320, 330, and 340 are described in a mobile device context, it will be appreciated that one or more of such operations may be performed at a computing platform (e.g., computing platform 122) that is separate from the mobile device. In such implementations, a mobile device user may upload a camera view obtained at a mobile device to a different computing platform for performing one or more of operations 310 - 340. In this way, the authoring of augmented reality environments is not necessarily limited to operations performed at a mobile device, but may be at least partially performed at other computing platforms.

At 350, presentation of a media content item at the presentation region defined at operation 330 may be enabled and/or initiated responsive to user input and/or estimated mobile device position for the activation region defined at operation 340. It will be appreciated that the presentation of media content to a given user may be conditioned upon the access rights associated with that media content item. As previously described with reference to operation 340, activation regions may be defined to enable presentation of media content upon a mobile device being carried within an activation region by a user. Alternatively, activation regions may be defined to initiate presentation of media content without requiring further user input upon a mobile device being carried within an activation region by a user.

Furthermore, with respect to operation 350, presentation surfaces and/or activation surfaces that are deployed within an augmented reality environment may be presented in a camera view of a mobile device upon recognition of the three-dimensional feature captured in that camera view. For example, an extracted feature definition may be referenced by the feature extraction module while applying object recognition techniques to a particular camera view obtained at a mobile device for the purpose of presenting at that mobile device one or more media content items, presentation regions, and/or activation regions that are associated with that extracted feature definition.

Such object recognition techniques may again involve the comparison of a sample camera view to one or more extracted feature definitions in order to identify which extracted feature definition is present in the sample camera view. Such object recognition techniques typically include determination of the underlying spatial transformation, for example, homography, affine, or others, to correct for viewpoint difference between the three-dimensional feature in the sample camera view and the extracted feature definition. Upon identification of the relevant extracted feature definition for a given camera view, the content management module may retrieve the associated presentation region, activation region, media content item, and other information for that extracted feature definition from a database whether such database is located locally at the mobile device or remotely at a server system or other computing resource.

In at least some implementations, activation region definition 182 may define an activation region where the presentation of associated media content item 178 may be initiated or enabled if a mobile device enters into the activation region. For example, the activation region may define a specific region in a physical real-world environment where presentation of media content is initiated responsive to the user carrying the mobile device within that specific region as indicated by a state of the mobile device. For example, it will be appreciated that a position and/or orientation of a given mobile device relative to a given activation region may be obtained from positioning signals and/or inertial sensor measurements obtained on-board the mobile device, whereby presentation of media content may be initiated responsive to the position and/or orientation indicated by the state of the mobile device.

Where presentation of a media content item is initiated, the media content item associated with the activation region may be presented at an associated presentation region without requiring additional user input. By contrast, where presentation of a media content item is enabled, the media content item associated with the activation region may be presented responsive to an additional user input received, for example, at a graphical control element of the GUI, as a touch gesture received at a touch-sensitive graphical display, or as a user input received via other suitable user input device.

In some implementations of process 300, activation regions may be omitted from an augmented reality environment. For example, FIG. 9 shows an example GUI including a camera view 400 and a presentation region 910 that presents a graphical representation (e.g., an image) of a sign for enticing customers to enter a particular doorway defined by three-dimensional feature 410. Hence, in this particular implementation, presentation region 910 may present a media content item without reference to an associated activation region. In this way, a user may explore an augmented reality environment by directing a camera of a mobile device toward real-world objects and observing graphical content presented at an information layer of the GUI. For example, presentation of a media content item at a second mobile device may be enabled or initiated as a camera view of the second mobile device is capturing the presentation region attached to the three-dimensional feature.

In some implementations, content management module residing locally at a mobile device or remotely at a server system may receive updates of a position and/or orientation of a mobile device. In such implementations, where a position of a mobile device is identified at being within an activation region for which associated media content may be accessed by a user via the mobile device, a notification may be initiated at the mobile device. Such a notification may include a vibration of the mobile device via a haptic feedback device on-board the mobile device, a sound generated by an audio output device of the mobile device, and/or a visual indicator presented via a graphical display or light emitting element of the mobile device. In this way, a user may be notified as to the existence of a nearby augmented reality environment that is available for exploration by the user via the mobile device.

In the above implementations, a user may be presented with an information layer in a GUI of a graphical display along with a camera view (e.g., a real-time camera view) obtained via a camera of the mobile device. The information layer that is presented for a given camera view may be defined by presentation and/or activation regions that are associated with electronic representations of real-world objects captured in the camera view. Such implementations may be similarly applied to guided tours comprising any suitable number of presentation and/or activation regions as defined by an associated tour definition. Such tour definitions may be authored by one or more users, for example, via the same mobile device or other computing platform or via two or more separate mobile devices and/or other computing platforms.

For example, a user may author a guided tour via tour creation tool 168 by associating one or more media content items that are to be deployed in an augmented reality environment (e.g., media content item 178) with a tour definition (e.g., tour definition 184). One or more other users may also contribute to the authoring of the guided tour by using tour creation tool 168 to associate one or more other media content items with the tour definition (e.g., tour definition 184). As such, two or more users may contribute to the authoring of a common guided tour in some implementations. Furthermore, in some implementations, a user may utilize rights management tool 170 to define a rights definition (e.g., rights definition 188) for a given tour to include or exclude one or more other users from collaborating to author a particular guided tour. For example, a user may exclude one or more other users from collaborating on the creation of a given guided tour while granting permission to one or more other users.

Such guided tours may be explored in an augmented reality environment via a GUI of a mobile device by the user that created the tour or by other users that are granted access by that user through an associated rights definition (e.g., rights definition 188). For example, a second user may be presented with one or more media content items associated with a given tour if the second user directs a camera view of a mobile device at real-world objects to which presentation and/or activation regions of that tour have been attached by a first user.

In at least some implementations, a tour definition may comprise a user defined ordered list of two or more associated media content items. In such implementations, media content items may be presented on the guided tour in the order defined by the ordered list. For example, a user exploring an augmented reality environment through the use of a guided tour may be prompted via a GUI of the mobile device to visit any suitable number of real-world locations where media content items are to be presented in an order that is defined by the ordered list of the tour definition. Furthermore, it will be appreciated that a user may deploy at least some of such media content items as visual identifiers as previously described, for example, with reference to presentation region 910 of FIG. 9. Such visual identifiers may serve as signs or other suitable identifiers for directing users along a particular tour route defined by the tour definition. In this way, mobile device users may explore their surrounding real-world environment with the assistance of graphical content forming an information layer that supplements a camera view of their respective mobile devices.

Position determination techniques described herein may be implemented in conjunction with various wireless communication networks such as a wireless wide area network (WWAN), a wireless local area network (WLAN), a wireless personal area network (WPAN), and so on. The term "network" and "system" are often used interchangeably. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, and so on. A CDMA network may implement one or more radio access technologies (RATs) such as cdma2000, Wideband-CDMA (W-CDMA), and so on. Cdma2000 includes IS-95, IS-2000, and IS-856 standards. A TDMA network may implement Global System for Mobile Communications (GSM), Digital Advanced Mobile Phone System (D-AMPS), or some other RAT. GSM and W-CDMA are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may be an IEEE 802.11x network, and a WPAN may be a Bluetooth network, an IEEE 802.15x, or some other type of network. The techniques may also be implemented in conjunction with any combination of WWAN, WLAN and/or WPAN.

The methodologies described herein may be implemented in different ways and with different configurations depending upon the particular application. For example, such methodologies may be implemented in hardware, firmware, and/or combinations thereof, along with software. In a hardware implementation, for example, a processing unit may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other devices units designed to perform the functions described herein, and/or combinations thereof.

The herein described storage media may comprise primary, secondary, and/or tertiary storage media. Primary storage media may include memory such as random access memory and/or read-only memory, for example. Secondary storage media may include mass storage such as a magnetic or solid state hard drive. Tertiary storage media may include removable storage media such as a magnetic or optical disk, a magnetic tape, a solid state storage device, etc. In certain implementations, the storage media or portions thereof may be operatively receptive of, or otherwise configurable to couple to, other components of a computing platform, such as a processor.

In at least some implementations, one or more portions of the herein described storage media may store signals representative of data and/or information as expressed by a particular state of the storage media. For example, an electronic signal representative of data and/or information may be "stored" in a portion of the storage media (e.g., memory) by affecting or changing the state of such portions of the storage media to represent data and/or information as binary information (e.g., ones and zeros). As such, in a particular implementation, such a change of state of the portion of the storage media to store a signal representative of data and/or information constitutes a transformation of storage media to a different state or thing.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter.

Some portions of the preceding detailed description have been presented in terms of algorithms or symbolic representations of operations on binary digital electronic signals stored within a memory of a specific apparatus or special purpose computing device or platform. In the context of this particular specification, the term specific apparatus or the like includes a general purpose computer once it is programmed to perform particular functions pursuant to instructions from program software. Algorithmic descriptions or symbolic representations are examples of techniques used by those of ordinary skill in the signal processing or related arts to convey the substance of their work to others skilled in the art. An algorithm is here, and generally, is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated as electronic signals representing information. It has proven convenient at times, principally for reasons of common usage, to refer to such signals as bits, data, values, elements, symbols, characters, terms, numbers, numerals, information, or the like. It should be understood, however, that all of these or similar terms are to be associated with appropriate physical quantities and are merely convenient labels.

Unless specifically stated otherwise, as apparent from the following discussion, it is appreciated that throughout this specification discussions utilizing terms such as "processing," "computing," "calculating,", "identifying", "determining", "establishing", "obtaining", and/or the like refer to actions or processes of a specific apparatus, such as a special purpose computer or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device. In the context of this particular patent application, the term "specific apparatus" may include a general purpose computer once it is programmed to perform particular functions pursuant to instructions from program software.

Reference throughout this specification to "one example", "an example", "certain examples", or "exemplary implementation" means that a particular feature, structure, or characteristic described in connection with the feature and/or example may be included in at least one feature and/or example of claimed subject matter. Thus, the appearances of the phrase "in one example", "an example", "in certain examples" or "in some implementations" or other like phrases in various places throughout this specification are not necessarily all referring to the same feature, example, and/or limitation. Furthermore, the particular features, structures, or characteristics may be combined in one or more examples and/or features.

While there has been illustrated and described what are presently considered to be example features, it will be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter may also include all aspects falling within the scope of appended claims, and equivalents thereof.

## Claims

1. A computer-implemented method, comprising:
extracting a three-dimensional feature of a real-world object captured in a camera view of a mobile device;
attaching a presentation region for a media content item to at least a portion of the three-dimensional feature responsive to a user input received at the mobile device, wherein the user defines the placement of the presentation region relative to the three-dimensional feature by manipulating, moving and/or resizing the presentation region using a graphical user interface; and
defining an activation region for the media content item relative to the extracted three-dimensional feature, wherein presentation of the media content item at a mobile device is responsive to that mobile device entering within the activation region.

2. The method of claim 1, wherein extracting the three-dimensional feature comprises applying object recognition to the three-dimensional feature to obtain an electronic representation of the three-dimensional feature; and
wherein attaching the presentation region to at least a portion of the three-dimensional feature comprises associating a presentation surface of the presentation region with the electronic representation of the three-dimensional feature.

3. The method of claim 2, further comprising:
initiating presentation of the media content item at the presentation surface.

4. The method of claim 1, further comprising:
varying a position and/or an orientation of the attached presentation surface relative to the three-dimensional feature responsive to one or more additional user inputs received at the mobile device.

5. The method of claim 4, further comprising:
presenting the camera view at a touch-sensitive graphical display of the mobile device; and
receiving the one or more additional user inputs via the touch-sensitive graphical display while said camera view is presented at the touch-sensitive graphical display to at least partially define a position and/or an orientation of the attached presentation surface relative to the three-dimensional feature.

6. The method of claim 1, further comprising:
associating the attached presentation surface with the media content item.

7. The method of claim 1, further comprising:
wherein said extracting the three-dimensional feature of the real-world object comprises receiving said captured camera view at a server system from the mobile device via a communication network; and
wherein said attaching the presentation region for the media content item to at least the portion of the three-dimensional feature comprises receiving the user input at the server system from the mobile device via the communication network and initiating said attaching responsive to receiving the user input at the server system.

8. The method of claim 7, further comprising:
receiving a subsequent camera view of the mobile device at a server system from the mobile device via a communication network, said subsequent camera view capturing the presentation region;
enabling presentation of the media content item at the presentation region by initiating transmission of the media content item from the server system to the mobile device via the communication network for presentation of the media content item at the presentation region captured in the subsequent camera view of the mobile device.

9. The method of claim 1, further comprising:
enabling presentation of the media content item at a second mobile device as a camera view of the second mobile device is capturing the presentation region attached to the three-dimensional feature.

10. The method of claim 9, wherein said enabling presentation of the media content item at the second mobile device comprises:
receiving the camera view of the second mobile device at a server system from the second mobile device via a communication network; and
initiating transmission of the media content item and a presentation region definition defining a location of the presentation region in the camera view of the second mobile device from the server system to the second mobile device via the communication network for presentation of the media content item at the presentation region captured in the camera view of the second mobile device.

11. The method of claim 9, wherein the presentation of the media content item is enabled and/or initiated dependent upon the position and/or orientation of the second mobile device with respect to the activation region.

12. An apparatus, comprising:
means for extracting a three-dimensional feature of a real-world object captured in a camera view of a mobile device;
means for attaching a presentation region for a media content item to at least a portion of the three-dimensional feature responsive to a user input received at the mobile device, wherein the user defines the placement of the presentation region relative to the three-dimensional feature by manipulating, moving and/or resizing the presentation region using a graphical user interface; and
means for defining an activation region for the media content item relative to the extracted three-dimensional feature, wherein presentation of the media content item at a mobile device is responsive to that mobile device entering within the activation region.

13. The apparatus of claim 12, the apparatus comprising a mobile device, comprising:
a user input device to receive a user input;
a camera to capture a camera view;
a graphical display to present at least the camera view captured by the camera; and
a processor programmed with instructions to:
extract the three-dimensional feature of a real-world object captured in a camera view of the camera;
attach the presentation region for a media content item to at least a portion of the three-dimensional feature responsive to a user input received at the mobile device via the user input device.

14. An apparatus, comprising:
a storage medium having instructions stored thereon that are executable by a computing platform to perform the method according to any one of claims 1 to 11.

## Patentansprüche

1. Computerimplementiertes Verfahren, das Folgendes beinhaltet:
Extrahieren eines dreidimensionalen Merkmals eines in einer Kameraansicht eines mobilen Geräts erfassten realen Objekts;
Anhängen einer Präsentationsregion für ein Medieninhaltselement an wenigstens einen Teil des dreidimensionalen Merkmals als Reaktion auf eine an dem mobilen Gerät empfangene Benutzereingabe, wobei der Benutzer die Platzierung der Präsentationsregion relativ zu dem dreidimensionalen Merkmal durch Manipulieren, Bewegen und/oder Größenändern der Präsentationsregion mit einer grafischen Benutzeroberfläche definiert; und
Definieren einer Aktivierungsregion für das Medieninhaltselement relativ zu dem extrahierten dreidimensionalen Merkmal, wobei die Präsentation des Medieninhaltselements an einem mobilen Gerät auf das Eintreten des mobilen Geräts in die Aktivierungsregion anspricht.

2. Verfahren nach Anspruch 1, wobei das Extrahieren des dreidimensionalen Merkmals das Anwenden von Objekterkennung auf das dreidimensionale Merkmal beinhaltet, um eine elektronische Darstellung des dreidimensionalen Merkmals zu erhalten; und
wobei das Anhängen der Präsentationsregion an wenigstens einen Teil des dreidimensionalen Merkmals das Assoziieren einer Präsentationsfläche der Präsentationsregion mit der elektronischen Darstellung des dreidimensionalen Merkmals beinhaltet.

3. Verfahren nach Anspruch 2, das ferner Folgendes beinhaltet:
Einleiten einer Präsentation des Medieninhaltselements an der Präsentationsfläche.

4. Verfahren nach Anspruch 1, das ferner Folgendes beinhaltet:
Variieren einer Position und/oder einer Orientierung der angehängten Präsentationsfläche relativ zu dem dreidimensionalen Merkmal als Reaktion auf ein oder mehrere am mobilen Gerät empfangene zusätzliche Benutzereingaben.

5. Verfahren nach Anspruch 4, das ferner Folgendes beinhaltet:
Präsentieren der Kameraansicht auf einem berührungsempfindlichen Grafikdisplay des mobilen Geräts; und
Empfangen der ein oder mehreren zusätzlichen Benutzereingaben über das berührungsempfindliche Grafikdisplay, während die genannte Kameraansicht auf dem berührungsempfindlichen Grafikdisplay präsentiert wird, um eine Position und/oder eine Orientierung der angehängten Präsentationsfläche relativ zu dem dreidimensionalen Merkmal wenigstens teilweise zu definieren.

6. Verfahren nach Anspruch 1, das ferner Folgendes beinhaltet:
Assoziieren der angelagerten Präsentationsfläche mit dem Medieninhaltselement.

7. Verfahren nach Anspruch 1, das ferner Folgendes beinhaltet:
wobei das genannte Extrahieren des dreidimensionalen Merkmals des realen Objekts das Empfangen der genannten erfassten Kameraansicht an einem Serversystem von dem mobilen Gerät über ein Kommunikationsnetzwerk beinhaltet; und
wobei das genannte Anhängen der Präsentationsregion für das Medieninhaltselement an wenigstens den Teil des dreidimensionalen Merkmals das Empfangen der Benutzereingabe am Serversystem von dem mobilen Gerät über das Kommunikationsnetzwerk und das Einleiten des genannten Anhängens als Reaktion auf den Empfang der Benutzereingabe am Serversystem beinhaltet.

8. Verfahren nach Anspruch 7, das ferner Folgendes beinhaltet:
Empfangen einer nachfolgenden Kameraansicht des mobilen Geräts an einem Serversystem von dem mobilen Gerät über ein Kommunikationsnetzwerk, wobei die genannte nachfolgende Kameraansicht die Präsentationsregion erfasst;
Ermöglichen einer Präsentation des Medieninhaltselements in der Präsentationsregion durch Einleiten der Übertragung des Medieninhaltselements vom Serversystem zum mobilen Gerät über das Kommunikationsnetzwerk zum Präsentieren des Medieninhaltselements in der in der nachfolgenden Kameraansicht des mobilen Geräts erfassten Präsentationsregion.

9. Verfahren nach Anspruch 1, das ferner Folgendes beinhaltet:
Ermöglichen einer Präsentation des Medieninhaltselements an einem zweiten mobilen Gerät, während eine Kameraansicht des zweiten mobilen Geräts die an das dreidimensionale Merkmal angehängte Präsentationsregion erfasst.

10. Verfahren nach Anspruch 9, wobei das genannte Ermöglichen der Präsentation des Medieninhaltselements am zweiten mobilen Gerät Folgendes beinhaltet:
Empfangen der Kameraansicht des zweiten mobilen Geräts an einem Serversystem vom zweiten mobilen Gerät über ein Kommunikationsnetzwerk; und
Einleiten der Übertragung des Medieninhaltselements und einer Präsentationsregionsdefinition, die einen Ort der Präsentationsregion in der Kameraansicht des zweiten mobilen Geräts vom Serversystem definiert, zu einem zweiten mobilen Gerät über das Kommunikationsnetzwerk zur Präsentation des Medieninhaltselements in der in der Kameraansicht des zweiten mobilen Geräts erfassten Präsentationsregion.

11. Verfahren nach Anspruch 9, wobei die Präsentation des Medieninhaltselements in Abhängigkeit von der Position und/oder Orientierung des zweiten mobilen Geräts mit Bezug auf die Aktivierungsregion ermöglicht und/oder eingeleitet wird.

12. Vorrichtung, die Folgendes umfasst:
Mittel zum Extrahieren eines dreidimensionalen Merkmals eines in einer Kameraansicht eines mobilen Geräts erfassten realen Objekts;
Mittel zum Anhängen einer Präsentationsregion für ein Medieninhaltselement an wenigstens einen Teil des dreidimensionalen Merkmals als Reaktion auf eine am mobilen Gerät empfangene Benutzereingabe, wobei der Benutzer die Platzierung der Präsentationsregion relativ zu den dreidimensionalen Merkmalen durch Manipulieren, Bewegen und/oder Größenändern der Präsentationsregion mit einer grafischen Benutzeroberfläche definiert; und
Mittel zum Definieren einer Aktivierungsregion für das Medieninhaltselement relativ zu dem extrahierten dreidimensionalen Merkmal, wobei die Präsentation des Medieninhaltselements an einem mobilen Gerät als Reaktion auf das Eintreten des mobilen Geräts in die Aktivierungsregion erfolgt.

13. Vorrichtung nach Anspruch 12, wobei die Vorrichtung ein mobiles Gerät umfasst, das Folgendes umfasst:
ein Benutzereingabegerät zum Empfangen einer Benutzereingabe;
eine Kamera zum Erfassen einer Kameraansicht;
ein Grafikdisplay zum Präsentieren wenigstens der von der Kamera erfassten Kameraansicht; und
einen Prozessor, programmiert mit Befehlen zum:
Extrahieren des dreidimensionalen Merkmals eines in einer Kameraansicht der Kamera erfassten realen Objekts;
Anhängen der Präsentationsregion für ein Medieninhaltselement an wenigstens einen Teil des dreidimensionalen Merkmals als Reaktion auf eine an dem mobilen Gerät über das Benutzereingabegerät empfangene Benutzereingabe.

14. Vorrichtung, die Folgendes umfasst:
ein Speichergerät, auf dem Befehle gespeichert sind, die von einer Computerplattform zum Durchführen des Verfahrens nach einem der Ansprüche 1 bis 11 ausgeführt werden können.

## Revendications

1. Procédé mis en œuvre par ordinateur, comprenant :
l'extraction d'une caractéristique tridimensionnelle d'un objet du monde réel capturé dans une vue d'appareil de prise de vue d'un dispositif mobile ;
l'attachement d'une région de présentation pour un élément de contenu multimédia à au moins une partie de la caractéristique tridimensionnelle en réponse à une entrée d'utilisateur reçue au niveau du dispositif mobile, dans lequel l'utilisateur définit l'emplacement de la région de présentation relativement à la caractéristique tridimensionnelle en manipulant, déplaçant et/ou redimensionnant la région de présentation au moyen d'une interface utilisateur graphique ; et
la définition d'une région d'activation pour l'élément de contenu multimédia relativement à la caractéristique tridimensionnelle extraite, dans lequel la présentation de l'élément de contenu multimédia au niveau d'un dispositif mobile se produit quand ce dispositif mobile entre dans la région d'activation.

2. Procédé selon la revendication 1, dans lequel l'extraction de la caractéristique tridimensionnelle comprend l'application d'une reconnaissance d'objet à la caractéristique tridimensionnelle pour obtenir une représentation électronique de la caractéristique tridimensionnelle ; et
dans lequel l'attachement de la région de présentation à au moins une partie de la caractéristique tridimensionnelle comprend l'association d'une surface de présentation de la région de présentation à la représentation électronique de la caractéristique tridimensionnelle.

3. Procédé selon la revendication 2, comprenant en outre :
le lancement de la présentation de l'élément de contenu multimédia au niveau de la surface de présentation.

4. Procédé selon la revendication 1, comprenant en outre :
la modification d'une position et/ou d'une orientation de la surface de présentation attachée relativement à la caractéristique tridimensionnelle en réponse à une ou plusieurs entrées d'utilisateur supplémentaires reçues au niveau du dispositif mobile.

5. Procédé selon la revendication 4, comprenant en outre :
la présentation de la vue d'appareil de prise de vue au niveau d'un afficheur graphique sensible au toucher du dispositif mobile; et
la réception des une ou plusieurs entrées d'utilisateur supplémentaires par l'intermédiaire de l'afficheur graphique sensible au toucher pendant que ladite vue d'appareil de prise de vue est présentée au niveau de l'afficheur graphique sensible au toucher pour au moins définir partiellement une position et/ou orientation de la surface de présentation attachée relativement à la caractéristique tridimensionnelle.

6. Procédé selon la revendication 1, comprenant en outre :
l'association de la surface de présentation attachée à l'élément de contenu multimédia.

7. Procédé selon la revendication 1, comprenant en outre :
dans lequel ladite extraction de la caractéristique tridimensionnelle de l'objet du monde réel comprend la réception de ladite vue d'appareil de prise de vue au niveau d'un système serveur depuis le dispositif mobile par l'intermédiaire d'un réseau de communication ; et
dans lequel ledit attachement de la région de présentation pour l'élément de contenu multimédia à au moins la partie de la caractéristique tridimensionnelle comprend la réception de l'entrée d'utilisateur au niveau du système serveur depuis le dispositif mobile par l'intermédiaire du réseau de communication et le lancement dudit attachement en réponse à la réception de l'entrée d'utilisateur au niveau du système serveur.

8. Procédé selon la revendication 7, comprenant en outre :
la réception d'une vue d'appareil de prise de vue suivante du dispositif mobile au niveau d'un système serveur depuis le dispositif mobile par l'intermédiaire d'un réseau de communication, ladite vue d'appareil de prise de vue suivante capturant la région de présentation ;
l'autorisation de la présentation de l'élément de contenu multimédia au niveau de la région de présentation en lançant la transmission de l'élément de contenu multimédia du système serveur au dispositif mobile par l'intermédiaire du réseau de communication pour la présentation de l'élément de contenu multimédia au niveau de la région de présentation capturée dans la vue d'appareil de prise de vue suivante du dispositif mobile.

9. Procédé selon la revendication 1, comprenant en outre :
l'autorisation de la présentation de l'élément de contenu multimédia au niveau d'un second dispositif mobile quand une vue d'appareil de prise de vue du second dispositif mobile capture la région de présentation attachée à la caractérist ique tridimensionnelle.

10. Procédé selon la revendication 9, dans lequel ladite autorisation de la présentation de l'élément de contenu multimédia au niveau du second dispositif mobile comprend :
la réception de la vue d'appareil de prise de vue du second dispositif mobile au niveau d'un système serveur depuis le second dispositif mobile par l'intermédiaire d'un réseau de communication ; et
le lancement de la transmission de l'élément de contenu multimédia et d'une définition de région de présentation définissant un emplacement de la région de présentation dans la vue d'appareil de prise de vue du second dispositif mobile du système serveur au second dispositif mobile par l'intermédiaire du réseau de communication pour la présentation de l'élément de contenu multimédia au niveau de la région de présentation capturée dans la vue d'appareil de prise de vue du second dispositif mobile.

11. Procédé selon la revendication 9, dans lequel la présentation de l'élément de contenu multimédia est autorisée et/ou lancée en fonction de la position et/ou orientation du second dispositif mobile par rapport à la région d'activation .

12. Appareil, comprenant :
un moyen d'extraction d'une caractéristique tridimensionnelle d'un objet du monde réel capturé dans un vue d'appareil de prise de vue d'un dispositif mobile ;
un moyen d'attachement d'une région de présentation pour un élément de contenu multimédia à au moins une partie de la caractéristique tridimensionnelle en réponse à une entrée d'utilisateur reçue au niveau du dispositif mobile, dans lequel l'utilisateur définit le placement de la région de présentation relativement à la caractéristique tridimensionnelle en manipulant, déplaçant et/ou redimensionnant la région de présentation au moyen d'une interface utilisateur graphique ; et
un moyen de définition d'une région d'activation pour l'élément de contenu multimédia relativement à la caractéristique tridimensionnelle extraite, dans lequel la présentation de l'élément de contenu multimédia au niveau d'un dispositif mobile se produit quand ce dispositif mobile entre dans la région d'activation

13. Appareil selon la revendication 12, l'appareil comprenant un dispositif mobile, comprenant:
un dispositif d'entrée d'utilisateur destiné à recevoir une entrée d'utilisateur ;
un appareil de prise de vue pour capturer une vue d'appareil de prise de vue ;
un afficheur graphique pour présenter au moins la vue d'appareil de prise de vue capturée par l'appareil de prise de vue ; et
un processeur programmé avec des instructions pour :
extraire la caractéristique tridimensionnelle d'un objet du monde réel capturé dans une vue d'appareil de prise de vue de l'appareil de prise de vue ;
attacher la région de présentation pour un élément de contenu multimédia à au moins une partie de la caractéristique tridimensionnelle quand une entrée d'utilisateur est reçue au niveau du dispositif mobile par l'intermédiaire du dispositif d'entrée d'utilisateur.

14. Appareil, comprenant :
un support de mémorisation sur lequel sont mémorisées des instructions qui sont exécutables par une plate-forme informatique pour mettre en œuvre le procédé selon l'une quelconque des revendications 1 à 11.
